# EUROPEAN PATENT APPLICATION

(11) **EP 4 804 020 A1**
(43) Date of publication of application: **09.09.2026**
(21) Application number: 24902790.5
(22) Date of filing: 10.12.2024
(51) Int. Cl.: G06F 9/4401, G06T 7/246, G06N 3/045, G06T 5/50, G06N 3/0464, G06N 3/08

(54) **METHOD FOR WAKING UP DEVICE, AND SYSTEM AND CHIP**

(30) Priority: 12.12.2023 CN 202311702984
(71) Applicant: Huawei Technologies Co., Ltd., Shenzhen, Guangdong 518129 (CN)
(72) Inventor: YU, Jialin, Shenzhen, Guangdong 518129 (CN); GUO, Ruofan, Shenzhen, Guangdong 518129 (CN)
(74) Representative: Huawei European IPR
(86) International application number: PCT/CN2024/138048
(87) International publication number: WO 2025/124369

(57) **Abstract**

This application provides a device wake-up method, a system, and a chip. The method may include: processing a captured first image, determining a motion region image in the first image, and determining, by using a level-1 neural network, whether a target object exists in the motion region image; and when it is determined that the target object exists in the motion region image, performing reconfirmation, by using a level-2 neural network cascaded with the level-1 neural network, on a result output by the level-1 neural network. It can be learned that the target object is determined by using the level-1 neural network and the level-2 neural network, so that a false alarm frequency can be reduced, and system power consumption can be reduced.

## Description

This application claims priority to Chinese Patent Application No. 202311702984.3, filed with the China National Intellectual Property Administration on December 12, 2023 and entitled "DEVICE WAKE-UP METHOD, SYSTEM, AND CHIP", which is incorporated herein by reference in its entirety.

### TECHNICAL FIELD

This application relates to the field of artificial intelligence, and in particular, to a device wake-up method, a system, and a chip.

### BACKGROUND

With development of science and technology, a manner of interacting with a device is changing, and interaction with the device can be performed in human-machine interaction manners such as voice, action, and vision. These interaction manners cause an increase in a data computation amount on the device. Therefore, the device needs to use a processor with a stronger computational capability and higher power consumption. To reduce power consumption of the processor, a small "wake-up" unit is configured to detect inputs of a plurality of sensor interfaces. After detecting a target object, the "wake-up" unit wakes up the processor.

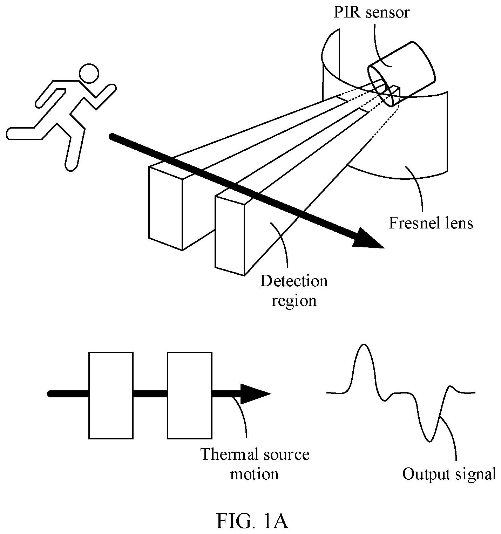

A common "wake-up" unit may be a pyroelectric infrared sensor (pyroelectric infrared sensor, PIR). FIG. 1A is a diagram of a scenario in which a device is woken up based on the PIR. As shown in FIG. 1A, the PIR sensor is a passive sensor based on infrared radiation, and can detect infrared radiation generated by an object, and use the infrared radiation as a trigger signal to wake up a detection device. A working principle of a PIR-based low-power wake-up strategy is as follows: When the object that can generate infrared radiation enters a detection region of the PIR sensor, the infrared radiation is enhanced by a Fresnel lens and then converged to the PIR sensor. Therefore, the PIR sensor can sense the radiation and output the trigger signal. In a sleep state, the device determines, based on the detected trigger signal, whether the object enters, and wakes up the detection device to perform a corresponding operation.

Because the PIR sensor can wake up the device by sensing infrared radiation, the PIR sensor is not robust to a non-target object or a change in an ambient temperature. As a result, the device is easily woken up by mistake, and power consumption of the device is increased.

### SUMMARY

This application provides a device wake-up method, a system, and a chip, to reduce a false wake-up frequency and reduce system power consumption.

According to a first aspect, this application provides a device wake-up method. The method may include:
obtaining a first image;
determining a motion region image in the first image based on the first image;
inputting the motion region image into a first neural network to obtain a first output result; and
when the first output result indicates that a target object exists in the motion region image, determining, by using a second neural network, that the motion region image includes the target object, and generating a trigger signal, where the trigger signal is used to wake up a device, and the first neural network is cascaded with the second neural network.

The first image is a frame of image in a video. According to this application, the motion region image in an image frame may be first determined, and then the trigger signal is generated to wake up the device to perform a corresponding operation only when it is determined, based on the first neural network and second neural network that are cascaded, that the target object exists in the motion region image. For example, a processor in the device is waken up to mark the target object in the image. It can be learned that the first neural network first determines whether a moving target object exists, and a dynamic and static false detection problem in a scenario can be filtered out. The second neural network confirms the result of the first neural network, and the device is woken up only when it is confirmed that the moving target object exists. Otherwise, the device is in a sleep state. A false alarm frequency can be reduced and system power consumption can be reduced based on reconfirmation performed by the second neural network. In addition, the first neural network and the second neural network are cascaded, and only one frame of data is required as an input of the two levels of neural networks. This can reduce a wake-up delay and improve a wake-up speed.

In a possible implementation of the first aspect, determining, by using the second neural network, that the motion region image includes the target object includes:
inputting feature data of an intermediate layer of the first neural network into the second neural network, and determining that the motion region image includes the target object, where precision of the second neural network is higher than precision of the first neural network.

It can be learned that an input of the second neural network is from the intermediate layer of the first neural network, and resolution of the feature data of the intermediate layer is less than resolution of an original image. Therefore, an input buffer of the second neural network can be reduced, and buffer pressure can be reduced.

In a possible implementation of the first aspect, determining the motion region image in the first image based on the first image includes:
determining the motion region image in the first image based on the first image and an average image, where the first image includes an image captured at a first moment, and the average image is determined based on images captured before the first moment.

It can be learned that in this application, when a change target or region (namely, the motion region image) of an image frame in a sensing scenario is sensed, a reference frame is not a previous frame of data, but an "average background frame" (namely, the average image) is introduced. It may be understood that if a previous frame of image is used as the reference frame, the previous frame of image is sensitive to noise and light changes between consecutive frames, and false alarms are continuously reported in scenarios of noise and frequent light changes, thereby increasing system power consumption. However, when the average image is used as the reference frame, noise and light changes are weakened, thereby reducing false alarms.

In a possible implementation of the first aspect, determining the motion region image in the first image based on the first image and the average image includes:
obtaining the average image, and determining, based on the first image and the average image, an average image corresponding to the first image; and
determining the motion region image in the first image in an inter-frame difference manner based on the first image and the average image corresponding to the first image.

It can be learned that a current average image (namely, the average image of the first image) may be obtained through computation only based on the current image (namely, the first image) and an original average image. The original average image can weaken noise and light changes in the first image, and reduce motion caused by the noise and light changes, thereby reducing a quantity of false alarms.

In a possible implementation of the first aspect, the average image is an image obtained by performing, based on a preset parameter, average computation on images captured before the first moment.

The preset parameter may be adaptively adjusted based on an actual scenario requirement. For example, in a low-contrast scenario like a service, sensitivity of motion detection may be improved by reducing the preset parameter.

In a possible implementation of the first aspect, after determining, by using the second neural network, that the motion region image includes the target object, and before generating the trigger signal, the method further includes:
determining that a motion direction of the target object in the motion region image is consistent with a preset direction, where the preset direction includes a motion direction set by a user.

It can be learned that in this application, targeted wake-up may be performed based on a feature motion status (namely, the preset direction) of the target object. For example, in a doorbell application scenario, it is assumed that a target object moving forward is an object of primary concern (for example, a host opens a door), and a target object moving backward (for example, the host leaves) or moving leftward or rightward (for example, a neighbor) is an object of secondary concern. In this case, the system may focus on wake-up of the target object in a specific motion direction (for example, forward motion) in the scenario, and filter out wake-up of the target motion in another direction (for example, backward motion and leftward or rightward motion), so that precise wake-up can be implemented, and system power consumption can be reduced.

In a possible implementation of the first aspect, determining that the motion direction of the target object in the motion region image is consistent with the preset direction includes:
obtaining a key point of the target object in the motion region image;
determining the motion direction of the target object based on the key point; and
determining that the motion direction is consistent with the motion direction.

It can be learned that the key point may reflect a motion status of the target object. A manner of determining the motion direction of the target object based on the key point is easy to implement. Therefore, a wake-up mechanism based on the motion direction of the target object is easy to apply to an actual scenario.

In a possible implementation of the first aspect, determining the motion direction of the target object based on the key point includes:
the key point includes at least one of a first key point, a second key point, and a third key point, the first key point is a point located on a head of the target object, the second key point is a point located on a left shoulder of the target object, and the third key point is a point located on a right shoulder of the target object;
obtaining a first distance and a second distance, where the first distance is a vertical distance from the first key point to a first connection line, the first connection line is a connection line between the second key point and the third key point, and the second distance is a distance between the second key point and the third key point; and
determining the motion direction of the target object based on a ratio of the first distance to the second distance.

It can be learned that the key point in this application may be skeleton data, and the motion direction of the target object is comprehensively determined by analyzing changes of a plurality of pieces of skeleton data of the target object, so that precision for determining the motion direction can be improved, a quantity of times of false wake-up is reduced, and system power consumption is reduced.

In a possible implementation of the first aspect, determining the motion direction of the target object based on the ratio of the first distance to the second distance includes:
if the ratio of the first distance to the second distance is less than a first threshold, determining that the motion direction of the target object is forward motion or backward motion.

It can be learned that the first distance may indicate a leftward/rightward motion trend of the target object, and the second distance may indicate a forward/backward motion trend of the target object. When the first distance is less than the second distance, it indicates that the forward/backward motion trend of the target object is less than the leftward/rightward motion trend, and the target object is more likely to move forward or backward. The first threshold is a value that is determined based on a large amount of data in this application and that can be used to determine the motion direction of the target object. Therefore, forward motion or backward motion that is of the target object and that is determined based on the first threshold is reliable. A wake-up manner based on forward motion or backward motion can reduce a quantity of times of false wake-up and reduce system power consumption.

In a possible implementation of the first aspect, determining that the motion direction of the target object is forward motion or backward motion includes:
obtaining motion region images of N frames of images that are captured before the first moment, where N is a positive integer greater than or equal to 1; and
determining, based on the second distance and an average value of second distances corresponding to key points of target objects in the motion region images of the N frames of images, that the motion direction of the target object is forward motion or backward motion.

It can be learned that in this application, forward and backward motion is estimated based on a difference between a current frame (namely, the first image) and previous N frames (namely, images captured before the first moment), so that reliability can be improved. A wake-up manner based on forward or backward motion can reduce a quantity of times of false wake-up and reduce system power consumption.

In a possible implementation of the first aspect, determining, based on the second distance and the average value of the second distances corresponding to the motion region images of the N frames of images, that the motion direction of the target object is forward motion or backward motion includes:
if an absolute value of a difference between the second distance and the average value is greater than a second threshold, the motion direction of the target object is forward motion; or
if an absolute value of a difference between the second distance and the average value is less than or equal to a second threshold, the motion direction of the target object is backward motion.

It can be learned that the second threshold is a value that can be used to determine forward motion or backward motion of the target object and that is determined based on a large amount of data in this application. Therefore, the determined forward motion or backward motion of the target object is reliable, and a quantity of times of false wake-up can be reduced and system power consumption can be reduced based on the wake-up manner of forward motion or backward motion.

In a possible implementation of the first aspect, determining the motion direction of the target object based on the ratio of the first distance to the second distance includes:
if the ratio of the first distance to the second distance is greater than or equal to a first threshold, determining that the motion direction of the target object is leftward motion or rightward motion.

It can be learned that the first distance may indicate a leftward/rightward motion trend of the target object, and the second distance may indicate a forward/backward motion trend of the target object. When the first distance is greater than the second distance, it indicates that the forward/backward motion trend of the target object is greater than the leftward/rightward motion trend, and the target object is more likely to move leftward or rightward. The first threshold is a value that is determined based on a large amount of data in this application and that can be used to determine the motion direction of the target object. Therefore, leftward motion or rightward motion that is of the target object and that is determined based on the first threshold is reliable. A wake-up manner based on leftward motion or rightward motion can reduce a quantity of times of false wake-up and reduce system power consumption.

In a possible implementation of the first aspect, determining the motion direction of the target object based on the key point includes:
the key point includes a central point of the motion region image; and
if a change of the central point of the motion region image on an X axis is greater than a change of the central point of the motion region image on a Y axis, determining that the motion direction of the target object is leftward motion or rightward motion.

In a possible implementation of the first aspect, determining the motion direction of the target object based on the key point includes:
the key point includes a central point of the motion region image; and
if a change of the central point of the motion region image on an X axis is less than or equal to a change of the central point of the motion region image on a Y axis, determining that the motion direction of the target object is forward motion or backward motion.

It can be learned that in this application, leftward/rightward motion or forward/backward motion of the target object may be determined based on the change of the central point in the motion region image. This implementation is simple and feasible, and an execution speed can be improved.

According to a second aspect, this application provides a compute apparatus. The apparatus includes a communication module and a processing module.

The communication module is configured to obtain a first image.

The processing module is configured to determine a motion region image in the first image based on the first image.

The processing module is further configured to input the motion region image into a first neural network to obtain a first output result.

The processing module is further configured to: when the first output result indicates that a target object exists in the motion region image, determine, by using a second neural network, that the motion region image includes the target object, and generate a trigger signal, where the trigger signal is used to wake up a device, and the first neural network is cascaded with the second neural network.

In a possible implementation of the second aspect, the processing module is specifically configured to:
input feature data of an intermediate layer of the first neural network into the second neural network, and determine that the motion region image includes the target object, where precision of the second neural network is higher than precision of the first neural network.

In a possible implementation of the second aspect, the processing module is specifically configured to:
determine the motion region image in the first image based on the first image and an average image, where the first image includes an image captured at a first moment, and the average image is determined based on images captured before the first moment.

In a possible implementation of the second aspect, the processing module is specifically configured to:
obtain the average image, and determine, based on the first image and the average image, an average image corresponding to the first image; and
determine the motion region image in the first image in an inter-frame difference manner based on the first image and the average image corresponding to the first image.

In a possible implementation of the second aspect, the processing module is further configured to:
determine that a motion direction of the target object in the motion region image is consistent with a preset direction, where the preset direction includes a motion direction set by a user.

In a possible implementation of the second aspect, the processing module is specifically configured to:
obtain a key point of the target object in the motion region image;
determine the motion direction of the target object based on the key point; and
determine that the motion direction is consistent with the motion direction.

In a possible implementation of the second aspect, the processing module is specifically configured to:
the key point includes at least one of a first key point, a second key point, and a third key point, the first key point is a point located on a head of the target object, the second key point is a point located on a left shoulder of the target object, and the third key point is a point located on a right shoulder of the target object;
obtain a first distance and a second distance, where the first distance is a vertical distance from the first key point to a first connection line, the first connection line is a connection line between the second key point and the third key point, and the second distance is a distance between the second key point and the third key point; and
determine the motion direction of the target object based on a ratio of the first distance to the second distance.

In a possible implementation of the second aspect, the processing module is specifically configured to:
if the ratio of the first distance to the second distance is less than a first threshold, determine that the motion direction of the target object is forward motion or backward motion.

In a possible implementation of the second aspect, the processing module is specifically configured to:
obtain motion region images of N frames of images that are captured before the first moment, where N is a positive integer greater than or equal to 1; and
determine, based on the second distance and an average value of second distances corresponding to key points of target objects in the motion region images of the N frames of images, that the motion direction of the target object is forward motion or backward motion.

In a possible implementation of the second aspect, the processing module is specifically configured to:
if an absolute value of a difference between the second distance and the average value is greater than a second threshold, the motion direction of the target object is forward motion; or
if an absolute value of a difference between the second distance and the average value is less than or equal to a second threshold, the motion direction of the target object is backward motion.

In a possible implementation of the second aspect, the processing module is specifically configured to:
if the ratio of the first distance to the second distance is greater than or equal to a first threshold, determine that the motion direction of the target object is leftward motion or rightward motion.

In a possible implementation of the second aspect, the processing module is specifically configured to:
the key point includes a central point of the motion region image; and
if a change of the central point of the motion region image on an X axis is greater than a change of the central point of the motion region image on a Y axis, determine that the motion direction of the target object is leftward motion or rightward motion.

In a possible implementation of the second aspect, the processing module is specifically configured to:
the key point includes a central point of the motion region image; and
if a change of the central point of the motion region image on an X axis is less than or equal to a change of the central point of the motion region image on a Y axis, determine that the motion direction of the target object is forward motion or backward motion.

According to a third aspect, an embodiment of this application provides an electronic device. The electronic device includes a processor. The processor is configured to execute instructions stored in a memory or run a logic circuit, to enable the communication apparatus to implement the method according to any one of the first aspect or the possible implementations of the first aspect or the method according to any one of the second aspect or the possible implementations of the second aspect.

In a possible implementation, the communication apparatus further includes a communication interface. The communication interface is configured to receive and/or send data, and/or the communication interface is configured to provide input and/or output for the processor.

In a possible implementation, the communication apparatus further includes a memory. The memory is configured to store at least one of instructions, a configuration file of the logic circuit, and data. Optionally, the processor and the memory may be further integrated into one component, that is, the processor and the memory may be further integrated together.

In the foregoing embodiment, the processor (or referred to as a general-purpose processor) that performs the method by invoking the computer instructions is used as an example for description. During specific implementation, the processor may alternatively be a dedicated processor. In this case, the computer instructions are already pre-loaded on the processor. Optionally, the processor may alternatively include both a dedicated processor and a general-purpose processor.

According to a fourth aspect, an embodiment of this application provides a computer-readable storage medium. The computer-readable storage medium stores instructions, and when the instructions are run on at least one processor, the method according to any one of the implementations of the first aspect or the method according to any one of the implementations of the second aspect is implemented.

According to a fifth aspect, this application provides a computer program product. The computer program product includes computer instructions, and when the instructions are run on at least one processor, the method according to any one of the implementations of the first aspect or the method according to any one of the implementations of the second aspect is implemented.

Optionally, the computer program product may be a software installation package or an image package. When the foregoing method needs to be used, the computer program product may be downloaded, and the computer program product is executed on the compute device.

According to a sixth aspect, this application provides a chip system. The chip system includes at least one processor, a memory, and an interface circuit. The memory, the interface circuit, and the at least one processor are interconnected through a line. The at least one memory stores a computer program. When the computer program is executed by the processor, the method according to any one of the implementations of the first aspect or the method according to any one of the implementations of the second aspect is implemented.

According to a seventh aspect, this application provides a communication system. The communication system includes the communication apparatus described in the fourth aspect and the communication apparatus described in the fifth aspect.

For beneficial effects of the technical solutions provided in the second aspect to the seventh aspect of this application, refer to the beneficial effects of the technical solutions in the first aspect. Details are not described herein again.

### BRIEF DESCRIPTION OF DRAWINGS

FIG. 1A is a diagram of a scenario in which a device is woken up based on a PIR;
FIG. 1B is a diagram of a low-power wake-up architecture combining PIR and motion detection;
FIG. 1C is a diagram of a low-power wake-up architecture combining motion detection and a CNN;
FIG. 2 is a diagram of a structure of a wake-up system according to an embodiment of this application;
FIG. 3 is a schematic flowchart of a device wake-up method according to an embodiment of this application;
FIG. 4A is a schematic flowchart of a motion region image in a first image according to an embodiment of this application;
FIG. 4B is a schematic flowchart of determining an average image according to an embodiment of this application;
FIG. 4C is a diagram of a key point of a target object according to an embodiment of this application;
FIG. 5 is a diagram of a wake-up architecture according to an embodiment of this application;
FIG. 6 is a diagram of another wake-up architecture according to an embodiment of this application;
FIG. 7 is a diagram of a structure of a compute apparatus 70 according to an embodiment of this application; and
FIG. 8 is a diagram of a structure of an electronic device 80 according to an embodiment of this application.

### DESCRIPTION OF EMBODIMENTS

The following describes embodiments of this application with reference to the accompanying drawings in embodiments of this application. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, or only B exists. In addition, in the descriptions of embodiments of this application, "a plurality of" means two or more.

In the following descriptions, the terms "first" and "second" are merely intended for a purpose of description, and shall not be interpreted as an implication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

The following specifically analyzes a technical problem that needs to be resolved in embodiments of this application and a corresponding application scenario.

Identification of a target object or a target scenario is a basic research topic in the field of deep learning, and many deep learning optimization technologies are based on image identification. Currently, a low-power target wake-up technology based on deep learning has been successfully implemented and applied in many fields such as security surveillance, doorbell and access control, and autonomous driving. A biggest challenge faced by the low-power wake-up technology based on deep learning lies in the huge demand for computing resources and storage resources. Many network miniaturization technologies, such as network pruning, network sparsification, and low-bit quantization, have emerged, making it possible for implementation and application of deep learning. However, in a low-power end-side device, especially in a field of designing a low-power chip at a milliwatt or microwatt level, an existing neural network optimization technology still cannot meet requirements for computing resources and sensing precision in an actual application scenario.

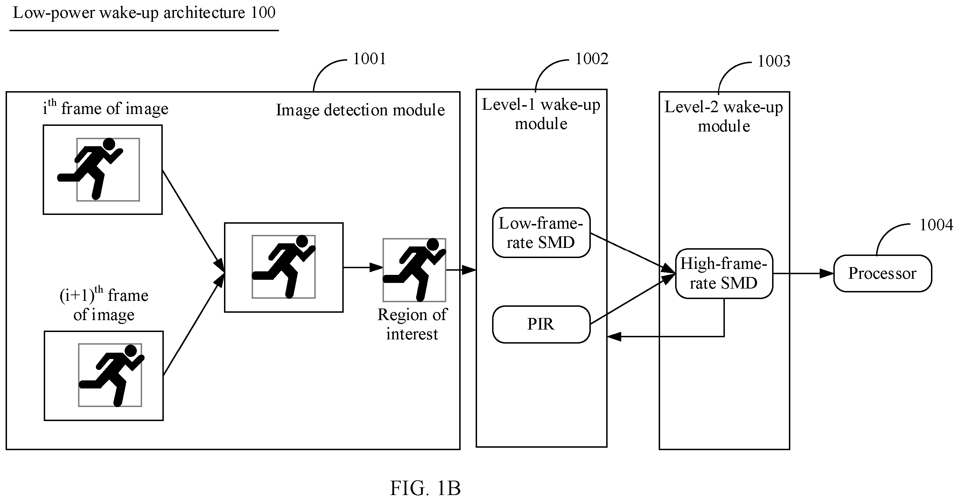

FIG. 1B is a diagram of a low-power wake-up architecture combining PIR and motion detection. The low-power wake-up architecture 100 shown in FIG. 1B includes at least one of an image detection module 1001, a level-1 wake-up module 1002, a level-2 wake-up module 1003, and a processor 1004.

The image detection module 1001 obtains a region of interest (region of interest, ROI) from a captured image (for example, an i^{th} frame of image or an (i+1)^{th} frame of image, where i is a positive integer), and inputs the region of interest into the level-1 wake-up module 1002. The region of interest is a region that needs to be processed and that is outlined in a manner of a box, a circle, an ellipse, or an irregular polygon from a processed image. The ROI is usually a region that is preset based on a range that needs to be detected, for example, an entrance/exit or a corridor.

As a level-1 "wake-up" unit, the level-1 wake-up module 1002 detects the region of interest based on at least one of low-frame-rate smart motion detection (smart motion detection, SMD) and a PIR sensor, to detect whether a motion object or a thermal motion object exists in the region of interest. When detecting that at least one of the motion object or the thermal motion object exists, the level-1 wake-up module 1002 triggers an interrupt, and the level-2 wake-up module 1003 performs further detection.

SMD may also be referred to as motion detection, and motion of a target object is detected by comparing a pixel difference between adjacent frames by using a frame difference method.

As a level-2 "wake-up" unit, the level-2 wake-up module 1003 further determines, based on high-frame-rate SMD, whether a target object (for example, a human target) exists in the captured image. When the target object is detected, the level-2 wake-up module 1003 wakes up the processor 1004 to perform corresponding processing. In addition, when the level-2 wake-up module 1003 does not detect the target object within a preset time, the level-2 wake-up module 1003 returns to level-1 "wake-up".

It can be learned that the level-2 wake-up module 1003 may filter out a result from the level-1 wake-up module 1002, to reduce a false wake-up frequency and reduce power consumption.

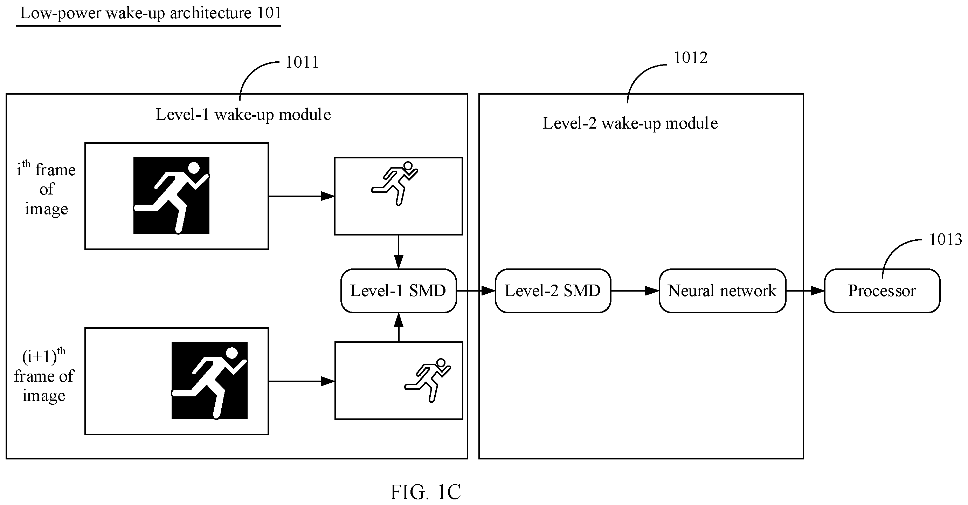

FIG. 1C is a diagram of a low-power wake-up architecture combining motion detection and a CNN. The low-power wake-up architecture 101 shown in FIG. 1C includes at least one of a level-1 wake-up module 1011, a level-2 wake-up module 1012, and a processor 1013.

The level-1 wake-up module 1011 is configured to: perform motion detection on a captured video image (for example, an i^{th} frame of image and an (i+1)^{th} frame of image), and trigger level-1 wake-up when a motion region (for example, a region in which two consecutive frames are different) is detected. The level-2 wake-up module 1012 performs further detection.

The level-2 wake-up module 1012 is configured to: further detect the motion region, generate a motion region event (region), and input the motion region event (region) into a neural network. The neural network further determines the motion region event (region), to determine whether a target object (for example, a human figure target) exists in the motion region event (region). When the target object is detected, the level-2 wake-up module 1012 wakes up the processor 1004 to perform corresponding processing.

It can be learned that the level-2 wake-up module 1003 may filter out a result from the level-1 wake-up module 1002, to improve end-to-end wake-up precision.

In conclusion, the architectures shown in FIG. 1B and FIG. 1C have the following problems:
1. Uncertainty in selection of an ROI region. In the method shown in FIG. 1B, an ROI region in which a target object exists is usually manually set or detected by using a specific algorithm in a full-scenario image. However, in some doorbell and access control scenarios, a target object (for example, a human figure target) is usually close to a capturing apparatus (for example, a camera). The target object in an ROI region set by an algorithm or manually may be easily cut off, thereby affecting object detection precision.
2. High frequency of motion detection false wake-up. In the methods shown in FIG. 1B and FIG. 1C, whether there is a pixel difference between a previous frame and a next frame in a captured image is sensed by using a frame difference method. This is used as level-1 wake-up. However, the frame difference method can only sense a region in which pixel jump occurs in the image, and cannot determine whether the pixel jump is caused by motion of the target object. Therefore, a misjudgment region determined based on a pixel difference between a previous frame and a next frame caused by motion of a non-target object or a light change may bring computing pressure and storage pressure to a subsequent detection process, and frequent level-1 false alarms may trigger level-2 wake-up, thereby increasing system power consumption.

It may be understood that the frame difference method is sensitive to noise and a weak light change between consecutive frames. For noise, because the frame difference method is used to perform target detection based on a pixel difference, when there is noise in a scenario, the noise is also mistakenly considered as motion of the target object. This causes continuous false alarms of the system, and increases the power consumption and processing load of the system. In addition, the frame difference method is also sensitive to weak light changes. When the light in the scenario changes slightly, a grayscale value of a pixel also changes slightly, which may be misjudged as motion of the target object. Similarly, this causes continuous false alarms of the system, increasing the power consumption and processing load of the system.

3. Low wake-up speed. SMD-based wake-up usually requires at least two frames of images. For a target object in a boundary or a fast motion scenario, a missed wake-up problem may be caused because the target object leaves the scenario. In addition, the SMD is prone to misjudgment on motion of a non-target object, and a large quantity of misjudgment regions are generated, increasing extra storage overheads.

In view of this, this application provides a device wake-up method, a system, and a chip. The method may include: processing a captured first image, determining a motion region image in the first image, and determining, by using a level-1 neural network, whether a target object exists in the motion region image; and when it is determined that the target object exists in the motion region image, performing reconfirmation, by using a level-2 neural network cascaded with the level-1 neural network, on a result output by the level-1 neural network. It can be learned that the target object is determined by using the level-1 neural network and the level-2 neural network, so that a false alarm frequency can be reduced, and system power consumption can be reduced.

The following describes some parts related to the neural network, to facilitate understanding by a person skilled in the art.
(1) A deep neural network (Deep Neural Network, DNN) is a broad concept. In a sense, a convolutional neural network (Convolutional Neural Network, CNN), a recurrent neural network (Recurrent Neural Network, RNN), a generative adversarial network (Generative adversarial network, GAN), and the like all belong to a scope of the deep neural network. The DNN is a neural network including a plurality of hidden layers. The neural network provided in this embodiment of this application may include a convolutional neural network.
(2) A convolutional neural network CNN is a multi-layer neural network. Each layer includes a plurality of two-dimensional planes, each plane includes a plurality of independent neurons, and the plurality of neurons on each plane share a weight. A quantity of parameters in the neural network can be reduced through weight sharing. Currently, in the convolutional neural network, performing a convolution operation by a processor is usually converting convolution of an input signal feature and a weight into a matrix multiplication operation between a signal matrix and a weight.
(3) A convolution kernel may be initialized in a form of a random-size matrix. In a training process of the convolutional neural network, an appropriate weight may be obtained through learning for the convolution kernel. In addition, benefits directly brought by weight sharing are that connections between layers of the convolutional neural network are reduced, and an overfitting risk is reduced.
(4) A filter (filter) is a serial connection of a plurality of convolution kernels, and each convolution kernel is allocated to a specific input channel. When a number of channels is 1, the filter is a convolution kernel. When a number of channels is greater than 1, the filter is a serial connection of a plurality of convolution kernels. For example, if an image is stored in RGB format as a tensor, an input includes three channels: an R matrix, a G matrix, and a B matrix (red, green, and blue, corresponding to three images of a same size). A convolution operation is performed on a matrix of each channel and a corresponding convolution kernel, and all convolution kernels corresponding to all channels form the filter. Each filter is used to extract different feature data. For another example, an image has four channels ARGB (transparency and red, green, and blue, corresponding to four images of a same size). It is assumed that a size of a convolution kernel is 100*100, and 16 convolution kernels w1 to w16 are used in total. Convolution kernels w1 to w4 form a first filter, convolution kernels w5 to w8 form a second filter, convolution kernels w9 to w12 form a third filter, and convolution kernels w13 to w6 form a fourth filter. Different filters are used to extract different feature data of an input image. A convolution operation is performed on the ARGB image by using the first filter, that is, a convolution operation is performed on the four images on the four channels by using w1 to w4, to obtain a first image. A first pixel in an upper left corner of the image is a weighted sum of pixels in 100*100 regions in the upper left corners of the four input images. The same rule applies to other scenarios. Similarly, an output of the layer corresponds to four "images" including the other filters. Each image is a response to a different feature in an original image.
(5) In a training process, a convolutional neural network may correct values of parameters in an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the neural network model is updated through back propagation of information about the error loss, to converge the error loss. The back propagation algorithm is an error-loss-centered back propagation motion, and is intended to obtain an optimal super-resolution model parameter, for example, a weight and an attention vector in this embodiment of this application.
(6) Convolution is to extract feature data from an original input, and extraction of the feature data is, in short, to extract a feature from the original input in a manner of a small region. In a mathematical relationship, convolution is an operation between a convolution kernel and an input matrix of a convolutional layer. Generally, an input matrix (input matrix) is a matrix extracted from an image matrix based on a stride (stride) of a convolution kernel during convolution. The convolution kernel is a small window that records a weight. The convolution kernel slides on the image matrix based on the stride. Each time the convolution kernel slides, the convolution kernel corresponds to a submatrix of the image matrix. The weight in the convolution kernel is multiplied by a value included in each submatrix, and a sum of products is assigned to an element corresponding to the convolution kernel in an output feature map (output matrix). The convolution is not limited to convolution of an original input, and further includes performing convolution again on an output result obtained through convolution. This is not limited in this embodiment of this application. For example, low-level feature data is extracted through first convolution, middle-level feature data is extracted through second convolution, and high-level features are extracted through third convolution. The feature may be continuously extracted and compressed. A high-level feature finally extracted may be understood as further concentration of an original feature, so that the finally obtained feature is more reliable, and various tasks such as classification and regression are processed by using a feature of a last layer.

The following describes application scenarios in embodiments of this application.

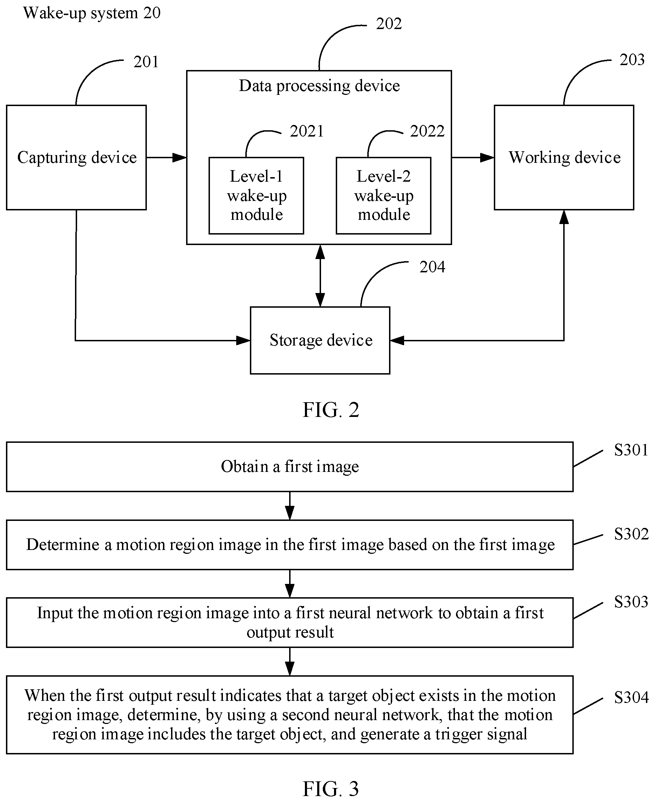

FIG. 2 is a diagram of a structure of a wake-up system according to an embodiment of this application. The wake-up system 20 includes a capturing device 201, a data processing device 202, a working device 203, and a storage device 204.

Specifically, the capturing device 201 may be specifically a camera, and is configured to capture a plurality of images of a surrounding environment. The camera may be a static camera or a video camera (namely, a camera), or may be a visible light camera or an infrared camera, or may be any camera configured to obtain an image. This is not limited in this embodiment of this application.

The data processing device 202 is configured to process a to-be-identified image captured by the capturing device 201, to identify a motion region in the to-be-identified image, and then determine whether a target object exists in the motion region.

In an implementation, the data processing device 202 includes a level-1 wake-up module 2021 and a level-2 wake-up module 2022. The level-1 wake-up module 2021 may determine a motion region image in the to-be-identified image based on smart motion detection SMD, then determine, based on a level-1 CNN, whether the target object exists in the motion region image, and wake up the level-2 wake-up module 2022 when determining that the target object exists in the motion region image. The level-2 wake-up module 2022 confirms, based on a level-2 CNN cascaded with the level-1 CNN, a result output by the level-1 wake-up module 2021, and wakes up the working device 203 when a result output by the level-2 CNN indicates that the target object exists in the motion region image. It can be learned that determining is performed by using the two-level wake-up architecture, so that a misjudgment frequency can be reduced, and end-to-end system power consumption can be reduced.

In an implementation, when the result output by the level-2 CNN indicates that the target object exists in the motion region image, the level-2 wake-up module 2022 is further configured to: determine a motion direction of the target object in the motion region image, and when the motion direction of the target object is consistent with a preset direction, generate a trigger signal to wake up the working device 203 to perform a corresponding operation. The preset direction includes a direction that needs to be focused on and that is set by a user, and includes but is not limited to forward motion, backward motion, leftward motion, and leftward motion.

The target object may be set by the user by using user equipment (not shown in FIG. 2), and the target object may be an object that the user wants to detect, for example, a human figure target, a vehicle, or an animal.

There may also be a plurality of types of data processing devices 202. For example, the data processing device 202 may be a device or a server having a data processing function, like a cloud server, a network server, an application server, or a management server, or may be a component having a communication capability and a data processing capability, like a chip, a software module, or an integrated circuit. The data processing device 202 receives a detection request from the user equipment (not shown in FIG. 2) through an interaction interface, and then performs detection processing on the target object in the motion region in manners such as machine learning, deep learning, search, inference, and decision-making by using a memory for storing data and a processing phase for data processing. The memory in the data processing device is a general name, and includes a local storage and a database that stores historical data. The database may be on the data processing device, or may be on another network server.

The working device 203 is configured to: when the data processing device 202 determines that there is a moving target object, wake up a processor to perform a corresponding operation, for example, display the moving target object identified by the data processing device 202, and/or generate alarm information, where the alarm information indicates that the moving target object is detected.

The storage device 204 is configured to store the motion region in each frame of image and the target object in the motion region that are identified by the data processing device 202.

For example, the capturing device 201 and the data processing device 202 may be integrated into one device. For example, the capturing device 201 and the data processing device 202 may be integrated into a same security surveillance device or a same vehicle. The capturing device 201 and the data processing device 202 may alternatively be separately disposed. For example, the capturing device 201 and the data processing device 202 may be a camera and a server that are separately disposed.

For example, the capturing device 201 may be in directly communication connection to the data processing device 202. For example, when the capturing device 201 and the data processing device 202 are integrated into a same device, the capturing device 201 and the data processing device 202 may be directly connected through a corresponding connection component. The capturing device 201 may be in indirectly communication connection to the data processing device 202. For example, when the capturing device 201 and the data processing device 202 are separately disposed, the capturing device 201 may be in indirectly communication connection to the data processing device 202 in a manner like wireless communication.

The wake-up system shown in FIG. 2 may be applied to a plurality of scenarios. The following describes the plurality of scenarios by using an example in which the capturing device 201 is a camera. In this scenario, the camera is usually disposed at a fixed location, to ensure that non-motion regions of all frames of images in a photographed video are basically the same and have no obvious change. The following describes three of the plurality of scenarios. However, this application is not limited to the three scenarios.

Scenario 1: The wake-up system shown in FIG. 2 is applied to an indoor or outdoor security surveillance scenario. In places such as a home, a school, or a construction site, to protect personal safety and property safety, a surveillance device is mounted on at least one location like a corridor, a door, or a room, and the surveillance device is configured to capture and display a surveillance image. The surveillance image indicates an image displayed on a display after the surveillance device performs photographing for a photographed scenario.

In this scenario, the surveillance device may identify a motion region image of each frame of image in a video by using the wake-up system, and may search for a target object (for example, a human figure target or an animal) by using the motion region image. When a human figure target or an animal exists in the motion region, the processor may be woken up to perform a corresponding operation, for example, marking the target object and displaying alarm information.

Scenario 2: The wake-up system shown in FIG. 2 is applied to a traffic surveillance scenario. At some high-speed intersections, toll gates, or crossroads, a road surface surveillance device is usually mounted to monitor and adjust traffic of passing vehicles, and the surveillance device is configured to capture and display a surveillance image.

In this scenario, the surveillance device identifies a motion region image of each frame of image in a video by using the wake-up system, and may search for a target object (for example, a vehicle) by using the motion region image. When it is detected that there are a particularly large quantity of vehicles traveling in a direction, the processor may be woken up to perform a corresponding operation, for example, prompting related personnel to control and adjust a traffic light.

Scenario 3: The wake-up system shown in FIG. 2 is applied to a photographing field. For example, the wake-up system is used in a mobile phone. In a scenario, when a user uses the mobile phone to perform photographing, to improve a photographing effect, the mobile phone may analyze, based on smart motion detection, a motion region image that appears in a photographed image. When identifying that a target exists in the motion region image, the mobile phone wakes up the processor to perform a corresponding operation, for example, marking and displaying an identified target object (for example, a moving dog).

FIG. 3 is a schematic flowchart of a device wake-up method according to an embodiment of this application. The method may be applied to the system shown in FIG. 2. The method includes but is not limited to the following steps.

Step S301: Obtain a first image.

Specifically, an electronic device may obtain each frame of image in a video that is photographed by a capturing device (for example, a camera) in a target scenario (for example, a security surveillance scenario, a traffic surveillance scenario, a photographing scenario, or an intelligent driving scenario). The first image is a frame of image in the video, for example, an image captured at a first moment.

It should be noted that the electronic device may be a device having a communication capability and a computational capability. In different scenarios, the electronic device may be different devices, for example, an intelligent camera, a surveillance doorbell, an intelligent lock, and a vehicle.

Step S302: Determine a motion region image in the first image based on the first image.

It may be understood that consecutive frames in the captured video have a continuity feature. If there is no moving object in the target scenario, a change between the consecutive frames is very weak. If there is a moving object, a change between the consecutive frames is obvious. Because the object in the target scenario moves, and a location of an image of the object in different image frames is different, the motion region image in the first image is a region in which a significant change exists between the first image and another image due to the moving object.

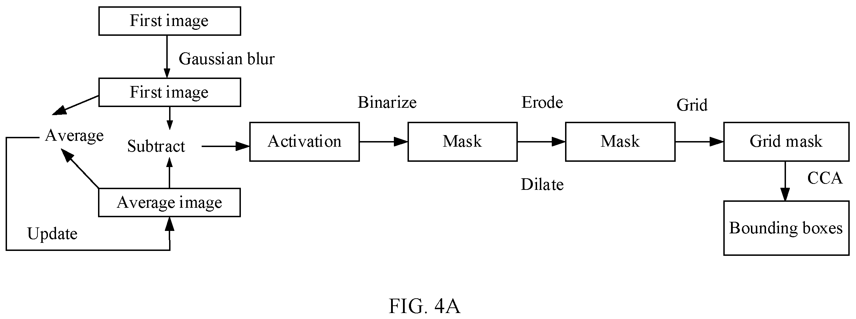

FIG. 4A is a schematic flowchart of a motion region image in a first image according to an embodiment of this application. As shown in FIG. 4A, the electronic device performs Gaussian blur (Gaussian blur) processing on the first image, to obtain a processed first image. A resolution of the first image may be 80×64. The electronic device subtracts an average image from the processed first image to obtain a differential image (activation) of an inter-frame candidate motion region, and updates the average image by using an average value of the first image and the average image. Then, the electronic device performs binarization (Binarize) on the differential image (activation) to obtain a mask (Mask), and performs morphological processing, for example, dilation (Dilate) and erosion (Erode), on the mask (Mask) to obtain a mask (Mask) obtained through morphological processing, so as to obtain a complete and accurate mask of the motion target region. Next, the electronic device performs grid (Grid) processing on the mask (Mask) obtained through morphological processing, to obtain a grid mask (Grid Mask). A resolution of the grid mask is 16×8. Finally, the electronic device performs connected component analysis (connected component analysis, CCA) on the grid mask to obtain a bounding box (bounding box). An image occupied by the bounding box in the first image is the motion region image.

In a possible implementation, the electronic device determines the motion region image in the first image based on the inter-frame difference method. Different from the conventional inter-frame difference method, in addition to the first frame in the video, a reference frame used in this embodiment of this application is not a previous frame of image that is of the current frame and that is directly extracted, but a concept of an "average background frame" (namely, an average image) is introduced. For example, the average image is an image obtained by performing average computation on images captured before the first moment.

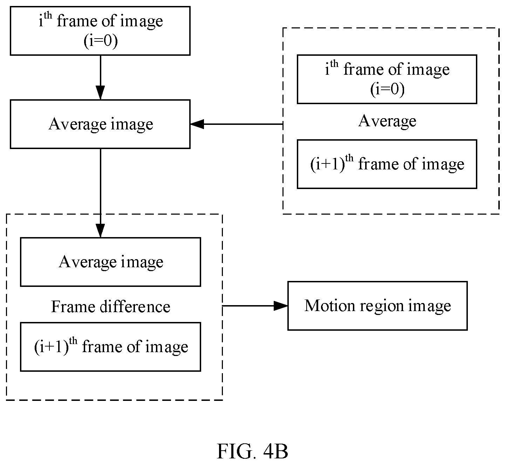

FIG. 4B is a schematic flowchart of determining an average image according to an embodiment of this application. As shown in FIG. 4A, an i^{th} (i=0) frame of image is a first frame of image in a video captured after the capturing device is powered on. Because there is no other image in the video before the i^{th} (i=0) frame of image, the i^{th} (i=0) frame of image may be directly considered as the average image. For an (i+1)^{th} frame of image after the i^{th} (i=0) frame of image, average computation may be first performed on the (i+1)^{th} frame of image and the average image, and an average value of the (i+1)^{th} frame of image and the average image is used to update the average image. Therefore, in addition to the first frame after power-on, an average value may be computed to update the average image when each subsequent frame of image is input. Further, computation of the average image of the current image depends only on the current image and the original average image.

In an implementation, the electronic device obtains the average image, determines, based on the first image and the average image, the average image corresponding to the first image, and then determines, based on the first image and the average image corresponding to the first image, the motion region image in the first image by using an inter-frame difference method. To be specific, a differential operation is performed on the first image and the average image of the first image, pixel points respectively corresponding to the first image and the average image of the first image are subtracted, and an absolute value of a grayscale difference is determined. When an absolute value of a grayscale difference corresponding to a region image exceeds a specific threshold, it may be determined that the region image is a motion region image.

It can be learned from FIG. 4B that, for the first image captured at the first moment, before the first image is input, the average image is an average value of images captured before the first moment, and the average image of the first image is related to the first image and the average image before the first moment.

For example, avg_frm(i+1)=α*avg_frm(i)+(1-α)*cur_frm(i+1), where i is a positive integer, avg_frm(i+1) is an average image of a current image, avg_frm(i) is an original average image, cur_frm is the current image, α is a preset parameter, and α indicates an update parameter of the average image. In an implementation, a value of α may be determined based on a use scenario. For example, in a low-contrast scenario like at night, sensitivity of motion detection may be improved by reducing the value of α. A conventional inter-frame difference method is sensitive to noise and weak light changes between consecutive frames, and false alarms are continuously reported in scenarios of noise and frequent light changes, thereby increasing system power consumption. In this embodiment of this application, the average image is constructed to weaken noise and light changes, to reduce a false alarm.

Step S303: Input the motion region image into a first neural network to obtain a first output result.

Specifically, the first neural network may be a convolutional neural network, and is trained based on sample data. In a process in which the electronic device identifies the object in the motion region image by using the first neural network, computation may be directly performed based on a trained model parameter, to obtain the first output result. It may be understood that there may be one or more objects in the motion region image, the target object is one of the one or more objects, and the sample data is sample data including the target object. Therefore, the electronic device may identify the target object in the motion region image based on the first neural network obtained through training based on the sample data.

Step S304: When the first output result indicates that the target object exists in the motion region image, determine, by using a second neural network, that the motion region image includes the target object, and generate a trigger signal.

It can be learned that the moving target object in the target scenario can be detected by performing step S302 and step S303, to filter out dynamic (for example, a curtain or a leaf that is fluttering) and static (for example, a statue or a poster) false detection problems in the target scenario. To avoid false wake-up caused by false detection and missing detection, when the first output result indicates that the target object exists in the motion region image, in this application, the second neural network is used to confirm the first output result output by the first neural network. When an output result of the second neural network also indicates that the target object exists in the motion region image, the trigger signal is generated to wake up the processor to perform corresponding processing. When the output result of the second neural network indicates that the target object does not exist in the motion region image, no trigger signal is generated, and the processor is not woken up to perform corresponding processing.

Precision of the first neural network is lower than precision of the second neural network. Therefore, the first neural network may be used to perform primary determining, and the second neural network may perform redetermining, to improve determining accuracy, reduce a quantity of times of false wake-up, and reduce system power consumption.

In a possible implementation, the first neural network is cascaded with the second neural network. The electronic device inputs feature data at an intermediate layer of the first neural network into the second neural network, and the second neural network identifies whether the target object exists in the motion region image. Therefore, in this application, wake-up may be implemented by inputting a single frame of image (namely, the first image). Compared with wake-up that depends on at least two frames of images and wake-up that depends on at least four frames of images, wake-up that depends on a single frame of image in this application can reduce a wake-up delay and improve a wake-up speed.

It can be learned that the input of the second neural network does not depend on the original first image, but the feature data at the intermediate layer of the first neural network is used as the input. For example, the feature data output to the second neural network may be from an eight-time down-sampling network intermediate layer of the first neural network. In this way, an input buffer of the second neural network can be reduced, and buffer pressure can be reduced.

In a possible implementation, to implement precise wake-up and reduce system power consumption, wake-up may be implemented in a motion direction that the user pays attention to. Therefore, after determining, by using the second neural network, that the motion region image includes the target object, the electronic device determines the motion direction of the target object in the motion region image, and when the motion direction belongs to the motion direction that the user pays attention to, generates the trigger signal, to wake up the processor in the electronic device to perform a corresponding operation. For example, if the motion direction that the user pays attention to is forward motion, when the motion direction of the target object in the motion region image is forward motion and is consistent with the motion direction that the user pays attention to, the trigger signal is generated to wake up the processor; or when the motion direction of the target object in the motion region image is at least one of leftward motion, rightward motion, or forward motion and is inconsistent with the motion direction that the user pays attention to, the processor is not woken up, and the system may continue to remain in a sleep state.

In a possible implementation, the electronic device obtains a key point of the target object in the motion region image, and then determines the motion direction of the target object based on a motion trend of the key point.

In an implementation, the key point includes a central point of the motion region image, and the electronic device estimates the motion direction of the target object based on change trends of the central point on an X axis and a Y axis. It may be understood that the compute device stores the motion region image before the first moment. Therefore, based on changes of the central point of the motion region image before the first moment on the X axis and the Y axis, the change trends of the central point of the motion region image at the first moment on the X axis and the Y axis may be obtained.

For example, if a change of the central point of the motion region image on the X axis is greater than a change of the central point of the motion region image on the Y axis, it indicates that in time domain, motion of the central point on the X axis significantly decreases or increases, and motion of the central point on the Y axis slightly fluctuates. The electronic device may determine that the motion direction of the target object is leftward motion or rightward motion.

For example, if a change of the central point of the motion region image on the X axis is less than or equal to a change of the central point of the motion region image on the Y axis, it indicates that in time domain, motion of the central point on the X axis slightly fluctuates, and motion of the central point on the Y axis significantly decreases or increases. The electronic device may determine that the motion direction of the target object is forward motion or backward motion.

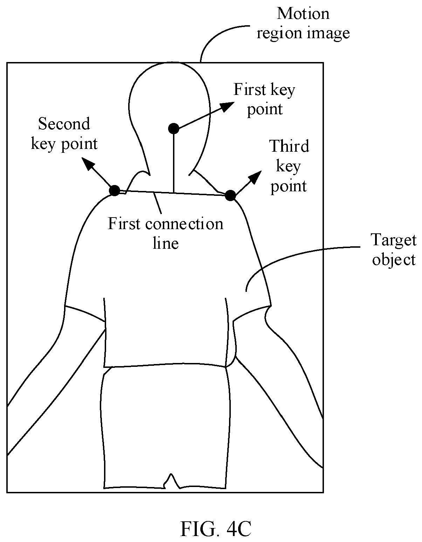

In an implementation, the key point includes at least one of a first key point, a second key point, and a third key point. The key point may be an imaging coordinate point of a skeleton point, and the imaging coordinate point is coordinates of the skeleton point in the motion region image. FIG. 4C is a diagram of a key point of a target object according to an embodiment of this application. As shown in FIG. 4C, a first key point is a point located on a head of the target object, a second key point is a point located on a left shoulder of the target object, and a third key point is a point located on a right shoulder of the target object.

In a possible implementation, the electronic device may predict the motion direction of the target object based on the key point of the target object in the motion region image, and specifically determine the motion direction of the target object based on at least one of the first key point, the second key point, and the third key point. Further, the electronic device obtains a first distance L1 and a second distance L2. As shown in FIG. 4C, the first distance L1 is a vertical distance from the first key point to a first connection line, the first connection line is a connection line between the second key point and the third key point, and the second distance L2 is a distance between the second key point and the third key point. Then, the electronic device may determine the motion direction of the target object based on a ratio (r=L1/L2) of the first distance L1 to the second distance L2. For example, the electronic device may determine, based on the ratio (r=L1/L2) of the first distance L1 to the second distance L2, whether the target object directly faces the capturing device (for example, a camera) or sideways faces the capturing device, and determine the motion direction of the target object based on this.

In an implementation, when the ratio of the first distance to the second distance is less than a first threshold (for example, the first threshold = 0.8), it may indicate that the target object directly faces the camera, and the electronic device may determine that the motion direction of the target object is forward motion or backward motion.

For example, for images captured before the first moment, if it is determined that the images include a motion region image, the electronic device may store the motion region image. Therefore, the electronic device may obtain motion region images of N frames of images that are captured before the first moment, compute a second distance between a second key point and a third key point of the target object in a motion region image of each of the N frames of images, and compute an average value of the N second distances, where N is a positive integer greater than or equal to 1. Then, the electronic device determines, based on the second distance (the distance between the second key point and the second key point of the target object in the motion region image in the first image captured at the first moment) and the average value of the second distances corresponding to the key points of the target object in the motion region images of the N frames of images, that the motion direction of the target object is forward motion or backward motion.

For example, the electronic device may estimate forward/backward motion of the target object based on a difference between the second distance and the average value. When the difference is greater than 0 and an absolute value of the difference is greater than a second threshold (for example, the second threshold = the second distance × 0.05), the electronic device determines that the motion direction of the target object is forward motion; or when an absolute value of the difference is less than or equal to the second threshold, the electronic device determines that the motion direction of the target object is backward motion.

In an implementation, when the ratio of the first distance to the second distance is greater than or equal to the first threshold (for example, the first threshold = 0.8), it may indicate that the target object directly faces the camera, and the electronic device may determine that the motion direction of the target object is leftward motion or rightward motion. For example, the electronic device may estimate leftward/rightward motion of the target object based on changes of the central point of the motion region image on the X axis and the Y axis. If a change of the central point on the X axis is greater than a change of the central point on the Y axis, the motion direction of the target object is leftward motion or rightward motion.

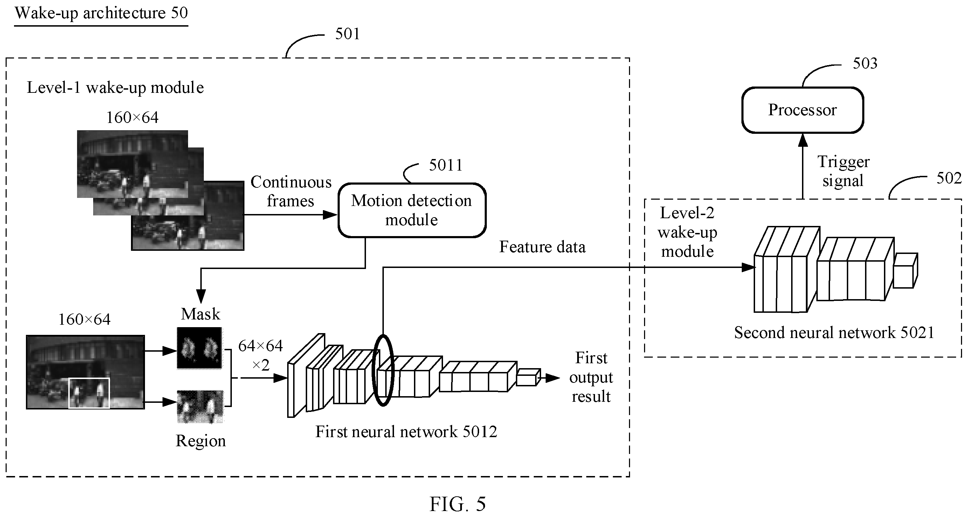

FIG. 5 is a diagram of a wake-up architecture according to an embodiment of this application, and is used in the system shown in FIG. 2. As shown in FIG. 5, the wake-up architecture 50 includes at least one of a level-1 wake-up module 501, a level-2 wake-up module 502, and a processor 503. The level-1 wake-up module 501 includes a motion detection module 5011 and a first neural network 5012, the level-2 wake-up module 502 includes a second neural network 5021, and the first neural network 5012 and the second neural network 5021 are cascaded.

It can be learned from FIG. 5 that the electronic device may sense, by using the motion detection module 5011, a change of a target or a region between consecutive frames in a target scenario, to obtain a motion region image in the consecutive frames. The electronic device specifically obtains the motion region image by using an average frame-based inter-frame difference method provided in this application. For detailed descriptions, refer to FIG. 4A and FIG. 4B. Details are not described herein again.

As shown in FIG. 5, the motion region image input into the first neural network 5012 includes a region (for example, a resolution is 64×64) obtained by cropping an image with an original resolution based on the bounding box in FIG. 4A and a mask image (for example, a resolution is 64×64) of the motion region image. In an implementation, the motion region image input into the first neural network 5012 is obtained by superimposing the mask image on the region. It can be learned that, in this application, to introduce location information of the target object to improve classification precision, a mask image channel corresponding to the motion region image is added to the input of the first neural network 5012.

In the first neural network 5012 shown in FIG. 5, the motion region image is analyzed to obtain a first output result. When the first output result indicates that the target object does not exist in the motion region image, it indicates that the first neural network 5012 detects that the motion of the target object does not exist in the current image frame. Therefore, the level-2 wake-up module 502 does not perform next-step processing on the image frame, that is, does not wake up the processor 503 to perform a corresponding operation.

As shown in FIG. 5, when the first output result indicates that the target object exists in the motion region image, the level-2 wake-up module 502 is started. The two cascaded neural networks require only single-frame data as input. The input of the second neural network does not depend on the original image frame data, but uses feature data at an intermediate layer of the first neural network as the input. In an implementation, the feature data obtained through feature extraction is from an eight-time down-sampling network intermediate layer of the level-1 neural network, and an input buffer of the level-2 neural network may be reduced to 40% of an original resolution (for example, 160×64).

Therefore, the second neural network 5021 analyzes the input feature data to obtain a second output result. When the second output result indicates that the target object does not exist in the motion region image, it indicates that the second neural network 5021 detects that the motion of the target object does not exist in the current image frame. Therefore, the processor 503 is not woken up to perform a corresponding operation. It may be understood that precision of the second neural network 5021 is higher than that of the first neural network 5012. Therefore, identification accuracy of the second neural network 5021 is higher than identification accuracy of the first neural network 5012, and the result output by the second neural network 5021 is reliable.

As shown in FIG. 5, when the second output result indicates that the target object exists in the motion region image, the level-2 wake-up module 502 generates a trigger signal to wake up the processor 503 to perform a corresponding operation.

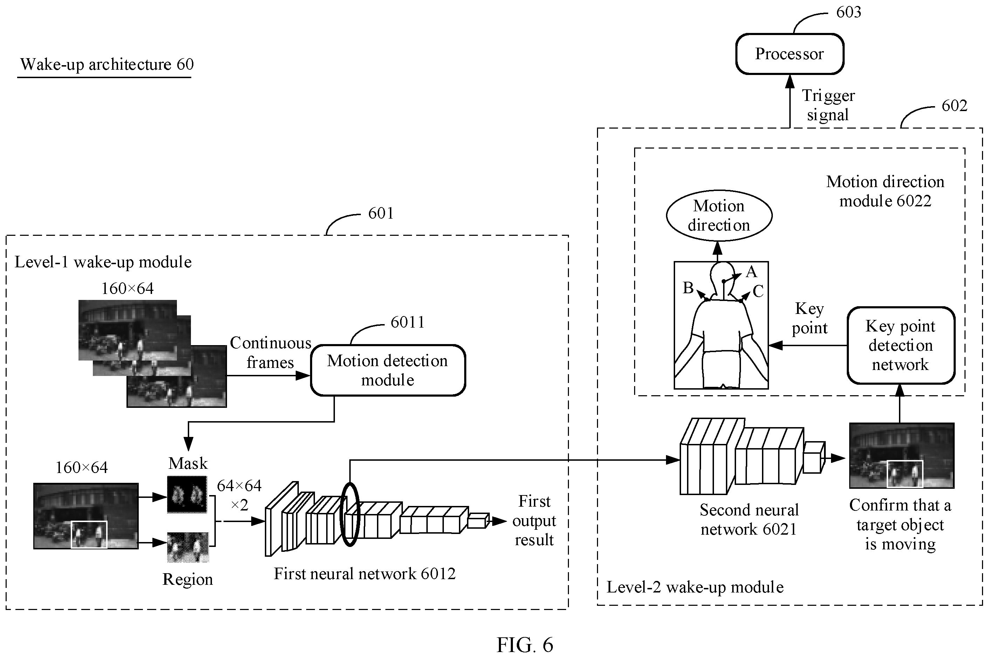

FIG. 6 is a diagram of another wake-up architecture according to an embodiment of this application, and is used in the system shown in FIG. 2. As shown in FIG. 6, the wake-up architecture 60 includes at least one of a level-1 wake-up module 601, a level-2 wake-up module 602, and a processor 603. The level-1 wake-up module 601 includes a motion detection module 6011 and a first neural network 6012, the level-2 wake-up module 602 includes a second neural network 6021 and a motion direction module 6022, and the first neural network 6012 and the second neural network 6021 are cascaded.

For descriptions of the level-1 wake-up module 601 and the second neural network 6021 of the level-2 wake-up module 602 in FIG. 6, refer to related descriptions of the level-1 wake-up module 501 and the second neural network 5021 of the level-2 wake-up module 502 in FIG. 5. Details are not described herein again.

The motion direction module 6022 shown in FIG. 6 is configured to identify a motion direction of a moving target object, and is specifically configured to determine a key point of the target object by using a key point detection network, and is further configured to determine the motion method of the target object based on the key point. For related descriptions of "identifying the motion direction of the moving target object", refer to step S304 in FIG. 3. Details are not described herein again.

When the motion direction of the target object determined by the motion direction module 6022 is inconsistent with a motion direction that the user pays attention to, it indicates that the motion direction is not a direction that the user is interested in, and the processor 603 does not need to be woken up to perform a corresponding operation.

It can be learned from FIG. 6 that when the motion direction of the target object determined by the motion direction module 6022 is consistent with the motion direction that the user pays attention to, it indicates that the motion direction is a direction that the user is interested in, and the level-2 wake-up module 602 generates a trigger signal to wake up the processor 603 to perform a corresponding operation.

It may be understood that the motion direction module 6022 is introduced into the wake-up architecture 60, so that the motion direction of the target object in the scenario can be accurately identified, to guide the system to perform wake-up in a direction that the user is interested in, and filter out wake-up in a direction that the user is not interested in. In this way, the user can flexibly configure a wake-up status of the target object, and system power consumption can be reduced to a large extent. For example, for a common smart doorbell system, when a person passes by, the smart doorbell system is woken up to perform a corresponding operation, and cannot identify whether a moving target object is moving leftward or rightward or moving forward or backward. If a user needs to pay attention only to wake-up of a human figure target moving forward, leftward/rightward motion and backward motion are directions that the user does not pay attention to, and the system may continue to remain in a sleep state. Theoretically, power consumption can be reduced by 76%.

The foregoing describes the method in embodiments of this application, and the following provides an apparatus in embodiments of this application.

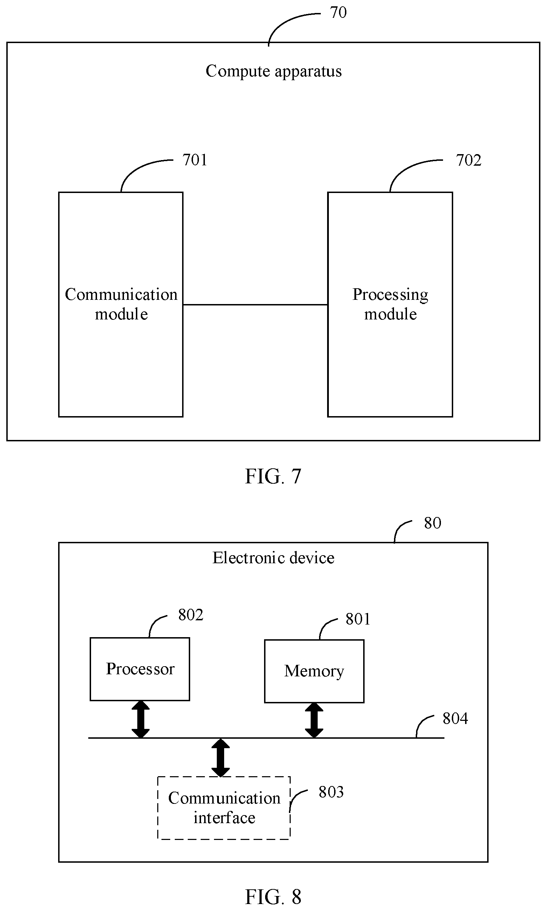

FIG. 7 is a diagram of a structure of a compute apparatus 70 according to an embodiment of this application. The compute apparatus 70 may include a communication module 701 and a processing module 702. The modules are specifically as follows:

The communication module 701 may implement a corresponding communication function, and the processing module 702 is configured to perform data processing. The communication module 701 may also be referred to as a communication interface or a transceiver unit. Optionally, the processing module 702 may be implemented by at least one processor or a processor-related circuit.

Optionally, the communication module 701 may further include a storage module. The storage module may be configured to store instructions and/or data. The processing module 702 may read the instructions and/or the data in the storage module, to implement the foregoing method embodiments.

Optionally, the communication module 701 may include a sending unit and a receiving unit. The sending unit is configured to perform a sending operation in the foregoing method embodiments. The receiving unit is configured to perform a receiving operation in the foregoing method embodiments. Optionally, the communication module 701 may be implemented by using a transceiver or a transceiver-related circuit.

It should be noted that the compute apparatus 70 may include a sending unit, but does not include a receiving unit. Alternatively, the compute apparatus 70 may include a receiving unit, but does not include a sending unit. Specifically, this may depend on whether the foregoing solution performed by the compute apparatus 70 includes a sending action and a receiving action.

Optionally, the compute apparatus 70 may be configured to perform the actions performed by the electronic device in the foregoing method embodiments. The compute apparatus 70 may be an electronic device or a component (for example, a processor, a chip, or a chip system) that can be configured in the electronic device. For example, the compute apparatus 70 is configured to perform the following solutions:

The communication module is configured to obtain a first image.

The processing module is configured to determine a motion region image in the first image based on the first image.

The processing module is further configured to input the motion region image into a first neural network to obtain a first output result.

The processing module is further configured to: when the first output result indicates that a target object exists in the motion region image, determine, by using a second neural network, that the motion region image includes the target object, and generate a trigger signal, where the trigger signal is used to wake up a device, and the first neural network is cascaded with the second neural network.

In a possible implementation, the processing module is specifically configured to:
input feature data of an intermediate layer of the first neural network into the second neural network, and determine that the motion region image includes the target object, where precision of the second neural network is higher than precision of the first neural network.

In a possible implementation, the processing module is specifically configured to:
determine the motion region image in the first image based on the first image and an average image, where the first image includes an image captured at a first moment, and the average image is determined based on images captured before the first moment.

In a possible implementation, the processing module is specifically configured to:
obtain the average image, and determine, based on the first image and the average image, an average image corresponding to the first image; and
determine the motion region image in the first image in an inter-frame difference manner based on the first image and the average image corresponding to the first image.

In a possible implementation, the processing module is further configured to:
determine that a motion direction of the target object in the motion region image is consistent with a preset direction, where the preset direction includes a motion direction set by a user.

In a possible implementation, the processing module is specifically configured to:
obtain a key point of the target object in the motion region image;
determine the motion direction of the target object based on the key point; and
determine that the motion direction is consistent with the motion direction.

In a possible implementation, the processing module is specifically configured to:
the key point includes at least one of a first key point, a second key point, and a third key point, the first key point is a point located on a head of the target object, the second key point is a point located on a left shoulder of the target object, and the third key point is a point located on a right shoulder of the target object;
obtain a first distance and a second distance, where the first distance is a vertical distance from the first key point to a first connection line, the first connection line is a connection line between the second key point and the third key point, and the second distance is a distance between the second key point and the third key point; and
determine the motion direction of the target object based on a ratio of the first distance to the second distance.

In a possible implementation, the processing module is specifically configured to:
if the ratio of the first distance to the second distance is less than a first threshold, determine that the motion direction of the target object is forward motion or backward motion.

In a possible implementation, the processing module is specifically configured to:
obtain motion region images of N frames of images that are captured before the first moment, where N is a positive integer greater than or equal to 1; and
determine, based on the second distance and an average value of second distances corresponding to key points of target objects in the motion region images of the N frames of images, that the motion direction of the target object is forward motion or backward motion.

In a possible implementation, the processing module is specifically configured to:
if an absolute value of a difference between the second distance and the average value is greater than a second threshold, the motion direction of the target object is forward motion; or
if an absolute value of a difference between the second distance and the average value is less than or equal to a second threshold, the motion direction of the target object is backward motion.

In a possible implementation, the processing module is specifically configured to:
if the ratio of the first distance to the second distance is greater than or equal to a first threshold, determine that the motion direction of the target object is leftward motion or rightward motion.

In a possible implementation, the processing module is specifically configured to:
the key point includes a central point of the motion region image; and
if a change of the central point of the motion region image on an X axis is greater than a change of the central point of the motion region image on a Y axis, determine that the motion direction of the target object is leftward motion or rightward motion.

In a possible implementation, the processing module is specifically configured to:
the key point includes a central point of the motion region image; and
if a change of the central point of the motion region image on an X axis is less than or equal to a change of the central point of the motion region image on a Y axis, determine that the motion direction of the target object is forward motion or backward motion.

FIG. 8 is a diagram of a structure of an electronic device 80 according to an embodiment of this application. The electronic device 80 is a device having a computational capability. The device herein may be a physical device, for example, a controller, a processor, a server (for example, a rack server), or a host, or may be a virtual device, for example, a virtual machine or a container.

As shown in FIG. 8, the electronic device 80 includes a processor 802 and a memory 801, and optionally includes a bus 804 and a communication interface 803. The processor 802 communicates with the memory 801 and the like through the bus 804. It should be understood that quantities of processors and memories in the electronic device 80 are not limited in this application. The processor 802, the memory 801, and optionally the bus 804 and the communication interface may be integrated into a system on a chip (System on a Chip, SoC for short). The SoC is a chip that integrates a plurality of functional modules, and integrates a plurality of functions into one chip, to implement features of high integration, high performance, and low power consumption.

The memory 801 is configured to provide storage space, and the storage space may optionally store application data, user data, an operating system, a computer program, and the like. The memory 801 may include a volatile memory (volatile memory), for example, a random access memory (random access memory, RAM). The memory 801 may further include a non-volatile memory (non-volatile memory), for example, a read-only memory (read-only memory, ROM), a flash memory, a hard disk drive (hard disk drive, HDD), or a solid state drive (solid state drive, SSD).

The processor 802 is a module for performing an operation, and may include any one or more of processors such as a controller (for example, a storage controller), a central processing unit (central processing unit, CPU), a graphics processing unit (graphics processing unit, GPU), a microprocessor (microprocessor, MP), a digital signal processor (digital signal processor, DSP), a coprocessor (assisting a central processing unit in completing corresponding processing and application), an application-specific integrated circuit (Application-Specific Integrated Circuit, ASIC), and a microcontroller unit (Microcontroller Unit, MCU).

The communication interface 803 is configured to provide an information input or output for the at least one processor; and/or the communication interface 803 may be configured to receive data sent from the outside and/or send data to the outside. The communication interface 803 may be a wired link interface like an Ethernet cable, or may be a wireless link (Wi-Fi, Bluetooth, universal wireless transmission, and another wireless communication technology) interface. Optionally, the communication interface 803 may further include a transmitter (for example, a radio frequency transmitter or an antenna), a receiver, or the like coupled to the interface.

The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 8, but this does not mean that there is only one bus or only one type of bus. The bus 804 may include a path for transmitting information between components (for example, the memory 801, the processor 802, and the communication interface 803) of the electronic device 80.

In this embodiment of this application, the memory 801 stores executable instructions, and the processor 802 executes the executable instructions to implement the device wake-up method, for example, the device wake-up method in the embodiment in FIG. 3, FIG. 5, or FIG. 6. In other words, the memory 801 stores instructions used to perform the device wake-up method.

An embodiment of this application further provides a chip apparatus. The chip apparatus includes at least one processor, and the at least one processor is configured to invoke a computer program or instructions stored in a memory, so that the processor performs the device wake-up method in the embodiment in FIG. 3, FIG. 5, or FIG. 6.

An embodiment of this application further provides a computer-readable storage medium. The computer-readable storage medium stores a computer program or instructions. When the computer program or the instructions are run on a processor, the device wake-up method in the embodiment in FIG. 3, FIG. 5, or FIG. 6 is implemented.

An embodiment of this application further provides a computer program product. The computer program product includes a computer program or instructions. When the computer program or the instructions are run on a processor, the device wake-up method in the embodiment in FIG. 3, FIG. 5, or FIG. 6 is implemented.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented through software, hardware, firmware, or any combination thereof. When software is used to implement the foregoing embodiments, all or some of the foregoing embodiments may be implemented in a form of a computer program product. The computer program product includes one or more computer programs and instructions. When the computer programs or instructions are loaded and executed on a computer, all or some of the processes or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In descriptions of this application, terms such as "first", "second", "S301", or "S302" are merely used for distinguishing descriptions and for ease of organizing this specification. Different sequence numbers do not have specific technical meanings, and cannot be understood as indicating or implying relative importance, or indicating or implying an execution sequence of operations. Execution sequences of the processes should be determined based on functions and internal logic of the processes.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In the descriptions of this application, unless otherwise specified, a quantity of nouns means "a singular noun or a plural noun", that is, "one or more". "At least one" means one or more. "Including at least one of the following: A, B, and C" means that A may be included, B may be included, C may be included, A and B may be included, A and C may be included, B and C may be included, or A, B, and C may be included, where A, B, and C may be singular or plural.

## Claims

1. A device wake-up method, wherein the method comprises:
obtaining a first image, wherein the first image is a frame of image in a video;
determining a motion region image in the first image based on the first image;
inputting the motion region image into a first neural network to obtain a first output result; and
when the first output result indicates that a target object exists in the motion region image, determining, by using a second neural network, that the motion region image comprises the target object, and generating a trigger signal, wherein the trigger signal is used to wake up a device, and the first neural network is cascaded with the second neural network.

2. The method according to claim 1, wherein determining, by using the second neural network, that the motion region image comprises the target object comprises:
inputting feature data of an intermediate layer of the first neural network into the second neural network, and determining that the motion region image comprises the target object, wherein precision of the second neural network is higher than precision of the first neural network.

3. The method according to claim 1 or 2, wherein determining the motion region image in the first image based on the first image comprises:
determining the motion region image in the first image based on the first image and an average image, wherein the first image comprises an image captured at a first moment, and the average image is determined based on images captured before the first moment.

4. The method according to claim 3, wherein determining the motion region image in the first image based on the first image and the average image comprises:
obtaining the average image, and determining, based on the first image and the average image, an average image corresponding to the first image; and
determining the motion region image in the first image in an inter-frame difference manner based on the first image and the average image corresponding to the first image.

5. The method according to any one of claims 1 to 4, wherein after determining, by using the second neural network, that the motion region image comprises the target object, and before generating the trigger signal, the method further comprises:
determining that a motion direction of the target object in the motion region image is consistent with a preset direction, wherein the preset direction comprises a motion direction set by a user.

6. The method according to claim 5, wherein determining that the motion direction of the target object in the motion region image is consistent with the preset direction comprises:
obtaining a key point of the target object in the motion region image;
determining the motion direction of the target object based on the key point; and
determining that the motion direction is consistent with the motion direction.

7. The method according to claim 6, wherein determining the motion direction of the target object based on the key point comprises:
the key point comprises at least one of a first key point, a second key point, and a third key point, the first key point is a point located on a head of the target object, the second key point is a point located on a left shoulder of the target object, and the third key point is a point located on a right shoulder of the target object;
obtaining a first distance and a second distance, wherein the first distance is a vertical distance from the first key point to a first connection line, the first connection line is a connection line between the second key point and the third key point, and the second distance is a distance between the second key point and the third key point; and
determining the motion direction of the target object based on a ratio of the first distance to the second distance.

8. The method according to claim 7, wherein determining the motion direction of the target object based on the ratio of the first distance to the second distance comprises:
if the ratio of the first distance to the second distance is less than a first threshold, determining that the motion direction of the target object is forward motion or backward motion.

9. The method according to claim 8, wherein determining that the motion direction of the target object is forward motion or backward motion comprises:
obtaining motion region images of N frames of images that are captured before the first moment, wherein N is a positive integer greater than or equal to 1; and
determining, based on the second distance and an average value of second distances corresponding to key points of target objects in the motion region images of the N frames of images, that the motion direction of the target object is forward motion or backward motion.

10. The method according to claim 9, wherein determining, based on the second distance and the average value of the second distances corresponding to the motion region images of the N frames of images, that the motion direction of the target object is forward motion or backward motion comprises:
if an absolute value of a difference between the second distance and the average value is greater than a second threshold, the motion direction of the target object is forward motion; or
if an absolute value of a difference between the second distance and the average value is less than or equal to a second threshold, the motion direction of the target object is backward motion.

11. The method according to claim 7, wherein determining the motion direction of the target object based on the ratio of the first distance to the second distance comprises:
if the ratio of the first distance to the second distance is greater than or equal to a first threshold, determining that the motion direction of the target object is leftward motion or rightward motion.

12. The method according to claim 6, wherein determining the motion direction of the target object based on the key point comprises:
the key point comprises a central point of the motion region image; and
if a change of the central point of the motion region image on an X axis is greater than a change of the central point of the motion region image on a Y axis, determining that the motion direction of the target object is leftward motion or rightward motion.

13. The method according to claim 6, wherein determining the motion direction of the target object based on the key point comprises:
the key point comprises a central point of the motion region image; and
if a change of the central point of the motion region image on an X axis is less than or equal to a change of the central point of the motion region image on a Y axis, determining that the motion direction of the target object is forward motion or backward motion.

14. A compute apparatus, wherein the apparatus comprises a communication module and a processing module, wherein
the communication module is configured to obtain a first image;
the processing module is configured to determine a motion region image in the first image based on the first image;
the processing module is further configured to input the motion region image into a first neural network to obtain a first output result; and
the processing module is further configured to: when the first output result indicates that a target object exists in the motion region image, determine, by using a second neural network, that the motion region image comprises the target object, and generate a trigger signal, wherein the trigger signal is used to wake up a device, and the first neural network is cascaded with the second neural network.

15. The apparatus according to claim 14, wherein the processing module is specifically configured to:
input feature data of an intermediate layer of the first neural network into the second neural network, and determine that the motion region image comprises the target object, wherein precision of the second neural network is higher than precision of the first neural network.

16. The apparatus according to claim 14 or 15, wherein the processing module is specifically configured to:
determine the motion region image in the first image based on the first image and an average image, wherein the first image comprises an image captured at a first moment, and the average image is determined based on images captured before the first moment.

17. The apparatus according to claim 16, wherein the processing module is specifically configured to:
obtain the average image, and determine, based on the first image and the average image, an average image corresponding to the first image; and
determine the motion region image in the first image in an inter-frame difference manner based on the first image and the average image corresponding to the first image.

18. The apparatus according to any one of claims 14 to 17, wherein the processing module is further configured to:
determine that a motion direction of the target object in the motion region image is consistent with a preset direction, wherein the preset direction comprises a motion direction set by a user.

19. The apparatus according to claim 18, wherein the processing module is specifically configured to:
obtain a key point of the target object in the motion region image;
determine the motion direction of the target object based on the key point; and
determine that the motion direction is consistent with the motion direction.

20. The apparatus according to claim 19, wherein the processing module is specifically configured to:
the key point comprises at least one of a first key point, a second key point, and a third key point, the first key point is a point located on a head of the target object, the second key point is a point located on a left shoulder of the target object, and the third key point is a point located on a right shoulder of the target object;
obtain a first distance and a second distance, wherein the first distance is a vertical distance from the first key point to a first connection line, the first connection line is a connection line between the second key point and the third key point, and the second distance is a distance between the second key point and the third key point; and
determine the motion direction of the target object based on a ratio of the first distance to the second distance.

21. The apparatus according to claim 20, wherein the processing module is specifically configured to:
if the ratio of the first distance to the second distance is less than a first threshold, determine that the motion direction of the target object is forward motion or backward motion.

22. The apparatus according to claim 21, wherein the processing module is specifically configured to:
obtain motion region images of N frames of images that are captured before the first moment, wherein N is a positive integer greater than or equal to 1; and
determine, based on the second distance and an average value of second distances corresponding to key points of target objects in the motion region images of the N frames of images, that the motion direction of the target object is forward motion or backward motion.

23. The apparatus according to claim 22, wherein the processing module is specifically configured to:
if an absolute value of a difference between the second distance and the average value is greater than a second threshold, the motion direction of the target object is forward motion; or
if an absolute value of a difference between the second distance and the average value is less than or equal to a second threshold, the motion direction of the target object is backward motion.

24. The apparatus according to claim 20, wherein the processing module is specifically configured to:
if the ratio of the first distance to the second distance is greater than or equal to a first threshold, determine that the motion direction of the target object is leftward motion or rightward motion.

25. The apparatus according to claim 19, wherein the processing module is specifically configured to:
the key point comprises a central point of the motion region image; and
if a change of the central point of the motion region image on an X axis is greater than a change of the central point of the motion region image on a Y axis, determine that the motion direction of the target object is leftward motion or rightward motion.

26. The apparatus according to claim 19, wherein the processing module is specifically configured to:
the key point comprises a central point of the motion region image; and
if a change of the central point of the motion region image on an X axis is less than or equal to a change of the central point of the motion region image on a Y axis, determine that the motion direction of the target object is forward motion or backward motion.

27. An electronic device, wherein the electronic device comprises at least one processor and at least one memory, the at least one memory stores computer instructions, and the at least one processor is configured to invoke the computer instructions to implement the method according to any one of claims 1 to 13.

28. A computer-readable storage medium, wherein the computer-readable storage medium comprises computer program instructions, and when the computer program instructions are executed by a processor, the method according to any one of claims 1 to 13 is implemented.

29. A computer program product, wherein the computer program product comprises a computer program or instructions, and when the computer program or the instructions are executed, the method according to any one of claims 1 to 13 is performed.

30. A chip system, wherein the chip system comprises at least one processor, a memory, and an interface circuit, the memory, the interface circuit, and the at least one processor are interconnected through a line, the at least one memory stores computer program instructions, and when the computer program instructions are executed by the at least one processor, the method according to any one of claims 1 to 13 is implemented.
